# EUROPEAN PATENT SPECIFICATION

(11) **EP 3 302 077 B1**
(45) Date of publication and mention of the grant of the patent: **10.04.2019**
(21) Application number: 16744564.2
(22) Date of filing: 27.05.2016
(51) Int. Cl.: A23C 19/16, C09D 167/04

(54) **CHEESE COATING**
KÄSEÜBERZUG
ENROBAGE DE FROMAGE

(30) Priority: 27.05.2015 NL 2014860
(43) Date of publication of application: 11.04.2018
(73) Proprietor: CSK Food Enrichment BV, 8938 AS Leeuwarden (NL)
(72) Inventor: MEIJER, Willem Cornelis, 6721 AM Bennekom (NL); KOOPMANS, Wieger Jan, 8911 ET Leeuwarden (NL); KEVELAM, Jan, 6711 JL Ede (NL); NURMI, Leena, FI-02270 Espoo (FI)
(74) Representative: Nederlandsch Octrooibureau
(86) International application number: PCT/NL2016/050378
(87) International publication number: WO 2016/190740

(56) References cited:
- EP-A1- 1 849 833
- EP-A1- 2 543 246
- WO-A1-2011/024021
- WO-A2-02/34857
- DATABASE WPI Week 200628 Thomson Scientific, London, GB; AN 2006-268077 XP002751921, & JP 2006 089687 A (UNITIKA LTD) 6 April 2006 (2006-04-06) cited in the application

## Description

The present invention is in the field of the cheese manufacture industry, and relates to an improved method for coating a cheese, as well as the corresponding coating compositions, use thereof for coating cheese and the coated cheeses.

### Background

The use of a polymer emulsion for the coating of young cheeses is known. Such coating provides protection to the cheese during ripening, inter alia from mould formation, and at the same time prevents rapid drying of the cheese by excessive evaporation of water from the cheese. Cheese coatings are generally applied by treatment of a cheese with the polymer emulsion and subsequent drying of the polymer emulsion, which generates a protective film. In order to be suitable as cheese coating composition, the polymer emulsion needs to have a sufficiently low viscosity, to enable easy application thereof on the surface of the cheese, but at the same time a sufficiently high viscosity that the applied layer of the emulsion remains sufficiently on the cheese whilst it is allowed to dry. Furthermore, the emulsion requires excellent film forming properties, such that an appropriate film is formed on the surface of the cheese.

In the art, emulsions of polyvinyl acetate copolymers, such as dibutyl maleate-vinyl acetate (VA-DBM) or ethylene-vinyl acetate (EVA) copolymers, are the most commonly used in cheese coating compositions. Some authors have suggested to use polylactic acid in cheese coating compositions, e.g. in EP 2 543 246, WO 2010/106274 and WO 2002/034857, but none have actually prepared such coating compositions. EP 246 relates to water-borne cheese coating compositions comprising one or more film forming agents selected from the group of an emulsion polymer and a biopolymer dispersion and further comprises viable lactic acid bacteria as preservative. Suitable biopolymer dispersions for water-borne cheese coating compositions include poly(hydroxy alkanoate), at least partially denatured proteins, in particular globular proteins and polylactic acid. No details are given of the polylactic acid, nor have actual lactic acid dispersion been prepared in EP 246.

Aqueous dispersions of lactic acid polymers are known outside the field of cheese coatings, such as from EP 1 302 502, US 2007/0088099, US 2011/0237710, WO 98/29477, WO 2011/024021, EP 1849833, JP 2015010155, JP H0978494, JP 2003321600, JP 2011148888, JP 2006089687, JP 200407413 and JP 2004323640. The present inventors have for the first time attempted to prepare such lactic acid polymers-based cheese coating compositions, and have overcome one or more difficulties associated therewith.

### Summary of the invention

The invention relates to an improved method for coating a cheese, wherein a coating composition comprising lactic acid polymers, is applied to a surface of the cheese. The invention also relates to the corresponding coating composition, use thereof for coating cheese and the coated cheeses. More specifically, the invention relates in a first aspect to a method for coating a cheese, comprising applying an aqueous coating composition to the surface of a cheese, wherein the coating composition comprises at least 5 wt% of lactic acid polymers dispersed in an aqueous phase, and optionally a plasticizer, wherein (i) the coating composition does not comprise an added source of lactic acid bacteria and/or (ii) the coating composition comprises free carboxylic acid and/or free carboxylate groups, preferably free carboxylic acid groups, in a total concentration of 0.001 - 5 mol/l. Determination of the concentration of free carboxylic acid groups or of free carboxylate groups is known in the art and is preferably performed using titration. It is especially preferred that the coating composition does not comprise an added source of lactic acid bacteria, and even more preferred that the coating composition does not comprise an added source of lactic acid bacteria and the coating composition comprises free carboxylic acid and/or free carboxylate groups, preferably free carboxylic acid groups, in a total concentration of 0.001 - 5 mol/l.

In a further aspect, the invention relates to a coated cheese obtainable by said method. In a further aspect, the invention relates to an aqueous food coating composition, comprising at least 5 wt% lactic acid polymers dispersed in an aqueous phase, protective colloids and optionally a plasticizer, and wherein (i) the coating composition does not comprise an added source of lactic acid bacteria and (ii) the coating composition comprises free carboxylic acid and/or free carboxylate groups, preferably free carboxylic acid groups, in a total concentration of 0.001 - 5 mol/l, (iii) the food coating composition does not contain more than 0.8 wt% of a polyoxyethylene-polyoxypropylene block-copolymer group surfactant, and the food coating composition does not contain more than 4 wt% of an ammonia or an organic amine, (iv) the food coating composition does not contain lactic acid polymer which is poly-L-lactic acid and/or poly-D-lactic acid, and (v) the food coating composition does not contain both a silane coupling agent and a lubricant. Determination of the concentration of free carboxylic acid groups or of free carboxylate groups is known in the art and is preferably performed using titration. In a further aspect, the invention relates to the use of a coating composition comprising at least 5 wt% lactic acid polymers dispersed in an aqueous phase, protective colloids and optionally a plasticizer, for coating of cheese, wherein (i) the coating composition does not comprise an added source of lactic acid bacteria, and/ or (ii) the coating composition comprises free carboxylic acid and/or free carboxylate groups, preferably free carboxylic acid groups, in a total concentration of 0.001 - 5 mol/l.

Although it has been suggested in the art to include lactic acid polymers in cheese coating compositions, none of these disclosures describe an actual cheese coating composition comprising lactic acid polymers. The present inventors now surprisingly found that including lactic acid polymers, provides coating compositions with an intrinsic protection against microbial (especially bacterial or fungicidal) spoilage or intrinsic preservation property. Upon storage, the lactic acid polymers will slowly hydrolyse and eventually release lactic acid which is a known food grade antimicrobial. The growth of unwanted microorganisms on the cheese coating during ripening and storage of the cheese can be reduced when the coating composition according to the present invention is used to coat the cheese, preferably without the need of including antimicrobial agents in the coating composition. Especially the presence of protective colloids, typically polyvinyl alcohol colloids, which may act as a carbon source for unwanted microorganisms, in the coating composition according to the invention may lead to microbial spoilage of the cheese.

The present invention not only provides lactic acid polymer-based cheese coatings for the first time, but these coating compositions are a major improvement over prior art cheese coating compositions. First of all, lactic acid polymers are prepared from lactic acid, which may originate from milk, just as the remainder of the cheese, while widely-used poly(vinyl acetate) copolymers (PVA) are petrochemical-based. The present invention thus provides a potentially renewable and/or more environmentally friendly coating composition compared to prior art PVA-based coating compositions. Especially the use of lactic acid polymers provides an interesting development, since now for the first time, it is possible to prepare an entire cheese, including the coating, from milk, milk ingredients and/or milk-derived products. As a further advantage, the cheeses coated with the coating composition according to the present invention are generally better protected against undesirable drying of the cheese during ripening and/or storage, compared to commercially available polyvinyl alcohol-stabilised vinyl acetate based emulsion copolymers.

### Detailed description

The present invention relates to an improved method for coating a cheese, using a coating composition comprising lactic acid polymers, as well as to the coating composition per se and to the use thereof for the coating of cheese.

### Method for coating a cheese

In one aspect, the invention concerns a method for coating a cheese, characterised in that the coating composition according to the invention is used. The coating composition to be used in the method according to the invention comprises at least 5 wt% lactic acid polymers, optionally a plasticizer and no added source of lactic acid bacteria and/or the coating composition comprises free carboxylic acid and/or free carboxylate groups, preferably free carboxylic acid groups, in a total concentration of 0.001 - 5 mol/l. The coating composition preferably further comprises protective colloids. Thus, in a first embodiment, the present invention concerns a method for coating a cheese, comprising applying a coating composition to a surface of a cheese, wherein the coating composition comprises at least 5 wt% lactic acid polymers, optionally a plasticizer and no added source of lactic acid bacteria. Thus, in a second embodiment, the present invention concerns a method for coating a cheese, comprising applying a coating composition to a surface of a cheese, wherein the coating composition comprises at least 5 wt% lactic acid polymers, optionally a plasticizer and free carboxylic acid and/or free carboxylate groups, preferably free carboxylic acid groups, in a total concentration of 0.001 - 5 mol/l. Thus in a third embodiment, the present invention concerns a method for coating a cheese, comprising applying a coating composition to a surface of a cheese, wherein the coating composition comprises at least 5 wt% lactic acid polymers, optionally a plasticizer, no added source of lactic acid bacteria and free carboxylic acid and/or free carboxylate groups, preferably free carboxylic acid groups, in a total concentration of 0.001 - 5 mol/l. The coating composition according to the invention is defined further below. The cheese to be coated in the method according to the invention is preferably a hard or semi-hard cheese, more preferably selected from the group consisting of Gouda, Edam, Maasdam, Tilsit, Emmental, Gruyère and Parmesan.

Typically, the cheese to be subjected to the method according to the invention is green cheese, i.e. the coating is applied after manufacture of the cheese but prior to ripening thereof. Manufacture of green cheese is common in the art and usually involves coagulating casein proteins from a cheese precursor, usually milk or cheese milk, to obtain curd, and then cutting, draining, scalding, pressing, shaping and salting the curd, to obtain green cheese. In one embodiment, the method according to the invention includes the manufacture of green cheese from the cheese precursor. The method according to the invention thus preferably comprises coagulating casein proteins from a cheese precursor, usually milk or cheese milk, to obtain curd, and then cutting, draining, scalding, pressing, shaping and salting the curd, to obtain green cheese, and subsequently applying the coating composition according to the invention to the green cheese.

The method of coating a cheese involves applying the coating composition to a surface of the cheese. Although it is preferred that the entire surface of the cheese is coated in the method according to the invention, the invention also encompasses partial coating of the cheese surface. It is also possible to coat different parts of the cheese at different moments, to eventually coat the entire cheese surface, e.g. first one half and after a drying period the second half, as explained further below.

It is preferred that the coated cheese is subsequently dried. The application of coating compositions and subsequent drying is known in the art, and may be performed by any means known in the art. Drying is conveniently combined with ripening of the cheese. During ripening, the cheese is stored for a certain period of time, typically at least 24 days and up to 3 months or more, such as up to 6 months, up to 1 year or even up to 2 years. During ripening, the cheese is often stored in an environment with controlled temperature and relative humidity. The duration of the ripening, the optimal temperature and relative humidity may vary between the different types of cheese, as known by the skilled person. As common in the art, the drying of the coated cheese is conveniently performed at the optimum conditions for ripening, as such integrating the drying with the ripening. Drying and ripening may preferably occur at a temperature of 0 - 25 °C, such as "cold ripening" at a temperature of 0 - 15 °C, preferably 10 - 15 °C, or "heated ripening" at a temperature of 15 - 25 °C, preferably 17 - 23 °C. During drying, the relative humidity is preferably 60 - 99 %, more preferably 75 - 95 %, most preferably 80 - 90 %. The drying/ripening of the cheese may comprise varying conditions. During the ripening period, the coating composition according to the invention may be applied multiple times onto the surface of the cheese. In one embodiment, the exposed surface (upper half) of the cheese is coated with the coating composition according to the invention, after which the coating composition is allowed to dry, preferably for a period for 12 h - 2 weeks, more preferably 24 h - 1 week. After the drying period, the cheese is turned and the then exposed and yet uncoated part of the cheese is subsequently coated and allowed to dry. This sequence of steps is repeated until the cheese has reached its desired age, preferably of at least 24 days, more preferably at least 4 weeks, and preferably up to 2 years, more preferably up to 1 year. During the ripening period, a cheese may receive 2 - 48 half-sided treatments, preferably 5 - 36 treatments, most preferably 8 - 24 treatments.

### Coating composition

In one aspect, the present invention concerns a coating composition. In the context of the present invention, the term 'coating composition' means a food coating composition. In a preferred embodiment, the present coating composition is a food coating composition that preferably is selected from the group consisting of a nut coating composition, a fruit coating composition, a sausage coating composition and a cheese coating composition. In one embodiment, the coating composition is a composition suitable for coating food, preferably a composition suitabe for coating one or more selected from the group consisting of nuts, fruit, sausage and cheese. In one embodiment, the coating composition is a composition suitable for coating cheese. In one embodiment, the coating composition is a cheese coating composition. The coating composition may also be referred to as a cheese coating composition. The coating composition according to the invention is preferably to be used in the method according to the invention. The invention also relates to the coating composition *per se,* and to the use of the coating composition according to the invention for coating a food product, preferably a cheese, more preferably a green cheese. Wherever "cheese coating composition" or "coating composition" is mentioned, this also refers to the coating composition to be applied in the method according to the invention. The coating composition, preferably an aqueous coating composition, according to the invention typically comprises (a) at least 5 wt% lactic acid polymers dispersed in an aqueous phase, (b) preferably protective colloids and (c) optionally a plasticizer and wherein the coating composition does not comprise an added source of lactic acid bacteria and/or the coating composition comprises free carboxylic acid and/or free carboxylate groups, preferably free carboxylic acid groups, in a total concentration of 0.001 - 5 mol/l. Thus, in a first embodiment, the present invention concerns a coating composition comprising at least 5 wt% lactic acid polymers, preferably protective colloids, optionally a plasticizer and no added source of lactic acid bacteria. Thus, in a second embodiment, the present invention concerns a coating composition comprising at least 5 wt% lactic acid polymers, optionally a plasticizer, preferably protective colloids and free carboxylic acid and/or free carboxylate groups, preferably free carboxylic acid groups, in a total concentration of 0.001 - 5 mol/l. Thus in a third embodiment, the present invention concerns a coating composition comprising at least 5 wt% lactic acid polymers, optionally a plasticizer, preferably protective colloids, no added source of lactic acid bacteria and free carboxylic acid and/or free carboxylate groups, preferably free carboxylic acid groups, in a total concentration of 0.001 - 5 mol/l. It is especially preferred that the coating composition does not comprise an added source of lactic acid bacteria, and most preferred that the coating composition comprises free carboxylic acid and/or free carboxylate groups, preferably free carboxylic acid groups, in a total concentration of 0.001 - 5 mol/l and no added source of lactic acid bacteria. In one embodiment, the invention concerns a coating composition comprising protective colloids. Within the context of the present invention, the coating composition may also be referred to as aqueous coating composition or aqueous cheese coating composition. The coating composition thus typically contains an aqueous phase containing water optionally with suitable additives as defined below dissolved or dispersed therein and polymeric material containing the lactic acid polymers and optionally further polymers and/or suitable additives as defined below.

Two important characteristics of the lactic acid polymers are the melt temperature and the (main) glass transition temperature. Lactic acid polymers with undesirably high melt temperatures, and associated therewith an undesirably high viscosity at the operating temperature, are no longer readily dispersible in aqueous melt dispersion processes and stable coating compositions cannot easily be prepared. In particular, the viscosity at the operation temperature should be sufficiently low to allow stirring of the polymer melt at the operation temperature, which conveniently is in the range of 50 to 170 °C, preferably 80 to 120 °C. Also, the film forming properties are negatively affected. Thus, the lactic acid polymer preferably has such a melt temperature that stirring of the polymer melt, optionally in the presence of water, is possible at a temperature in the range of 50 to 170 °C, preferably 80 to 120 °C. Typically, the viscosity of a melt of the lactic acid polymer at the operation temperature, which conveniently is in the range of 50 to 170 °C, preferably 80 to 120 °C, should be at most 100 Pa·s, preferably in the range of 1 - 50 Pa s (measured in a Brookfield viscometer at 20°C at a shear rate of 100 s⁻¹). In one embodiment, the melt temperature of the lactic acid polymer is at most 170 °C, more preferably 50 - 170 °C, most preferably 80 - 120 °C. Alternatively or preferably additionally the lactic acid polymers - preferably in the presence of the plasticizer and other coating components (when present in the coating composition according to the invention) and excluding any water - preferably comprise a main glass transition temperature *T*_{g} in the range of -10 to 50 °C, more preferably 5 to 37 °C, even more preferably 10 to 25 °C, even more preferably 13 to 21 °C, most preferably 14 to 19 °C. Such values for the main *T*_{g} are optimal, since lower values have been found to lead to sticky or tacky coatings while higher values give brittle films. Polymers, especially amorphous polymers, having a main *T*_{g} of 14 - 19 °C, are especially suitable to make stable dispersions that are applicable to cheeses at industrial conditions (typically 10 - 13 °C and about 83 - 88 % relative humidity). In addition to a main *T*_{g}, the lactic acid polymers may have one or more secondary glass transition temperatures. The *T*_{g} is preferably determined using differential scanning calorimetry. The method for determining the main *T*_{g} of a polymer that is to be included in the coating composition according to the invention is disclosed in DIN 53765, version March 1994, with the following modification: the heating and cooling rates are set at 10 K/min instead of at 20 K/min and wherein the sample size ranges between 5 - 10 mg. The film is thoroughly dried, preferably at room temperature and over a desiccant, immediately before measuring the *T*_{g}*.*

In the context of the present invention, "lactic acid polymer" refers to a polymer that comprises lactic acid monomeric units. The lactic acid polymers may comprise D-lactic acid and/or L-lactic acid monomeric units, preferably the lactic acid polymers comprise D-lactic acid and L-lactic acid monomeric units. Polymers of both D-lactic acid and L-lactic acid as monomeric units are referred to as poly-(DL)-lactic acid. In a preferred embodiment, the molar ratio of D-lactic acid to L-lactic acid monomeric units in the lactic acid polymers is in the range of 80:20 - 20:80, preferably 70:30 - 30:70, more preferably 55:45 - 45:55, most preferably the molar ratio of D-lactic acid and L-lactic acid monomeric units in the lactic acid polymers is about 1. Thus in one embodiment in the method according to the invention, the lactic acid polymers in the aqueous coating composition that is applied to the surface of a cheese comprise D-lactic acid and L-lactic acid monomeric units in a D-lactic acid to L-lactic acid molar ratio in the range of 80:20 - 20:80, preferably 70:30 - 30:70, more preferably 55:45 - 45:55. In one embodiment, the lactic acid polymer is not poly-L-lactic acid, poly-D-lactic acid or a mixture of poly-L-lactic acid and poly-D-lactic acid. Herein "poly-L-lactic acid" and "poly-D-lactic acid" refer to polylactic acid having respectively at least 90 mol% of L-lactic acid and at least 90 mol% of D-lactic acid as monomeric unit. Lactic acid polymers comprising substantially enantiomerically pure D-lactic acid or L-lactic acid as lactic acid monomeric unit give rise to crystalline brittle polymers which are more difficult to disperse. Although such crystalline polymers may still be dispersible, this typically requires operation temperatures above the melting temperature of the lactic acid polymers. It is thus preferred in the context of the present invention that the lactic acid polymers are predominantly amorphous and thus more easily applicable in the coating compositions according to the invention. Predominantly amorphous polymers, especially those having a main *T*_{g} of 14 - 19 °C, are especially suitable to make stable dispersions that are applicable to cheeses at industrial conditions, such as for example 10 - 13 °C and about 83 - 95 % relative humidity. The lactic acid polymers to be used in the coating composition according to the invention are preferably not terminally modified, i.e. the lactic acid polymers contain at least one -COOH end group, or a salt thereof.

Further monomeric units, i.e. comonomers, may also be present in addition to lactic acid monomeric units within the lactic acid polymers. Likewise, the resulting polymer is preferably predominantly amorphous. Preferably, the lactic acid polymers comprise at least 50 mol% of D-lactic acid and/or L-lactic acid monomeric units and optionally further monomeric units. Thus in one embodiment in the method according to the invention, the lactic acid polymers in the aqueous coating composition that is applied to the surface of a cheese comprise at least 50 mol% of D-lactic acid and/or L-lactic acid monomeric units and optionally further monomeric units. Typically, the other monomeric units amount to at most 50 mol% of the monomeric units that together make up the lactic acid polymers, preferably at most 25 mol%, most preferably at most 10 mol% or even at most 5 wt%. In one embodiment, the lactic acid polymers contain almost exclusively lactic acid monomeric units, i.e. at least 95 mol%, preferably at least 96 mol% or even at least 97 mol%, most preferably about 100 mol% of the monomeric units are lactic acid monomeric units. Such lactic acid polymers containing almost exclusively lactic acid monomeric units may also be referred to as "lactic acid homopolymers". Lactic acid polymers comprising more than 5 mol% of further monomeric units, in addition to lactic acid monomeric units, may also be referred to as "lactic acid copolymers". In case the lactic acid polymers are lactic acid homopolymers, the coating composition containing said lactic acid polymers preferably further comprises a plasticizer. Coating compositions comprising such lactic acid copolymers do not require the presence of plasticizers and such coating compositions comprising lactic acid copolymers are preferably free of added plasticizers, although the presence of organic acids may be desired for other reasons. Thus, in one embodiment, the coating composition comprises a plasticizer in case the lactic acid polymers are lactic acid homopolymers and the coating composition does not comprise an added plasticizer, optionally other than organic acids, in case the lactic acid polymers are lactic acid copolymers.

In case further monomeric units are present in the lactic acid polymers, these are typically selected from aliphatic hydroxycarboxylic acids, aliphatic diols, aliphatic dicarboxylic acids and mixtures thereof, preferably from aliphatic diols and/or an aliphatic dicarboxylic acids. Thus in one embodiment in the method according to the invention, the lactic acid polymers in the aqueous coating composition that is applied to the surface of a cheese comprise comprise further monomeric units selected from aliphatic hydroxycarboxylic acids, aliphatic diols, aliphatic dicarboxylic acids and mixtures thereof, preferably the lactic acid polymers comprise an aliphatic diol and/or an aliphatic dicarboxylic acid as further monomeric unit. The aliphatic diol preferably is a C₁₋₆ aliphatic diol, more preferably a C₂₋₄ aliphatic diol and most preferably selected from the group consisting of 1,2-ethanediol, 1,3-propanediol, 1,4-butanediol, 1,2-propanediol, 1,2-butanediol, 1,3-butanediol, 2,3-butanediol and mixtures thereof. The aliphatic dicarboxylic acid preferably is a C₄₋₁₂ aliphatic dicarboxylic acid, and more preferably selected from the group consisting of succinic acid, adipic acid, sebacic acid, azelaic acid, n-dodecanedioic acid and mixtures thereof. In an especially preferred embodiment, the lactic acid polymers comprise 70 - 100 mol% D-lactic acid and/or L-lactic acid monomeric units and 0 - 30 mol% further monomeric units, more preferably 75 - 98 mol% D-lactic acid and/or L-lactic acid monomeric units and 2 - 25 mol% further monomeric units, most preferably 90 - 98 mol% D-lactic acid and/or L-lactic acid monomeric units and 2 - 10 mol% further monomeric units.

The lactic acid polymers may be prepared by any means known in the art. Lactic acid polymers are typically prepared by condensation polymerisation of lactic acid (polycondensation), optionally in the presence of comonomers, or by ring opening polymerisation of lactide. Preferably, the lactic acid polymers to be used in the coating composition according to the invention and the method according to the invention are obtainable by, preferably obtained by, condensation polymerisation of lactic acid. Lactic acid polymers prepared by condensation polymerisation of lactic acid were found to even further improve the performance of the coating composition. Without being bound to a theory, it is expected that the polycondensation approach affords lactic acid polymers with a broader molecular weight distribution and often a lower number-averaged molecular weight compared to the ring opening approach, such that the lower molecular weight fraction of the lactic acid polymers formed via polycondensation acts as a plasticizer, thus reducing the *T*_{g} of the lactic acid polymers. Such a reduced *T*_{g} is expected to have a beneficial effect on the performance of the coating composition in terms of stability of the dispersion and/or applicability on cheese. In other words, as was surprisingly found, oligomers of lactic acid can effectively function as a plasticizer. In the context of this invention, an oligomer of lactic acid comprises 2 - 20 monomeric units of lactic acid. Thus, the lactic acid polymers are preferably obtained by or obtainable by polycondensation of D-lactic acid and of L-lactic acid, optionally in the presence of further comonomers, wherein the molar ratio of D-lactic acid to L-lactic acid monomeric units is in the range of 80:20 - 20:80, preferably 70:30 - 30:70, more preferably 55:45 - 45:55, most preferably the molar ratio is about 1. A further advantage of the polycondensation approach is that a higher amount of residual lactic acid may remain in the composition which is favourable in view of preservative properties.

Coating compositions are typically dispersions of a polymeric material in water preferably further comprising suitable additives. Thus, the coating composition according to the invention preferably is a dispersion comprising an aqueous continuous phase and dispersed therein particles of a polymer, wherein at least part of the polymeric fraction of the coating composition according to the invention is lactic acid polymer as defined above, and wherein the dispersion preferably comprises suitable additives. Although it is preferred that the entire polymer fraction consists of lactic acid polymers, also amounts of further polymers may be present, e.g. at most 70 wt%, preferably at most 50 wt%, more preferably at most 35 wt%, even more preferably at most 25 wt% or most preferably at most 10 wt% of further polymers. In one embodiment, less than 50 wt.% of the polymer comprised by the composition according to the invention is a polyhydroxyalkanoate; more preferably, the composition according to the invention does not contain a polyhydroxyalkanoate. In one embodiment, the coating composition according to the invention comprises one or more further polymers selected from the group consisting of poly(vinyl ester) (co)polymer, poly(acrylate) (co)polymer and poly(methacrylate) (co)polymer, most preferably of poly(vinyl ester) (co)polymer. In particular, a coating composition may be advantageously provided as a mixture comprising 30 to 70 wt% of a poly(vinyl ester) (co)polymer and 70 to 30 wt% of a poly(lactic acid) as defined above, based on total weight of the polymeric material present in the coating composition.

The coating composition according to the invention typically comprises lactic acid polymers in such an amount that upon complete hydrolysis of the polymers the composition comprises at least 5 wt%, preferably 10 - 70 wt%, more preferably 20 - 60 wt%, most preferably 25 - 50 wt% of lactic acid, based on total weight of the composition. The skilled person appreciates how to determine the preferred amount of the lactic acid polymers, e.g. depending on the lactic acid content thereof. Preferably, the coating composition according to the invention typically comprises at least 5 wt%, preferably 10 - 70 wt%, more preferably 20 - 60 wt%, most preferably 25 - 50 wt% of lactic acid polymers, based on total weight of the composition.

The coating composition according to the invention may further comprise suitable additives. The term "suitable additives" refers to additives that are known in the art to be suitable in coating compositions, in particular in cheese coating compositions, and includes plasticizers, pH regulators, thickening aids, defoaming aids, dispersion aids or emulsifiers, colorants, preservatives, anti-oxidants. In a preferred embodiment, the coating composition according to the invention comprises one or more additive selected from plasticizers, pH regulators, thickening aids, defoaming aids, dispersion aids or emulsifiers, colorants, preservatives, anti-oxidants and mixtures thereof. It is especially preferred that the coating composition does not contain a wax in an amount exceeding the total polymer content comprised by the composition, or even more preferably, the coating composition does not contain a wax In one embodiment, especially if the coating composition comprises lactic acid homopolymers, the coating composition according to the invention comprises a plasticizer. The coating composition according to the invention or the coating composition to be applied in the method according to the invention preferably comprises a plasticizer, more preferably 0.1 - 15 wt% plasticizer, relative to the weight of lactic acid polymers. The combined content of plasticizer and lactic acid polymers preferably amounts to 20 - 70 wt%. Thus in one embodiment, the coating composition according to the invention or the coating composition to be applied in the method according to the invention comprises 20 - 70 wt%, preferably 30 - 50 wt%, more preferably 35 - 45 wt% of the combined content of lactic acid polymers and plasticizer, relative to the total weight of the coating composition. In an especially preferred embodiment, the coating composition according to the invention consists of the lactic acid polymer as defined hereinabove, including lactic acid oligomers and monomers, dispersed in an aqueous phase and optionally one or more further polymers selected from the group consisting of poly(vinyl ester) (co)polymer, poly(acrylate) (co)polymer and poly(methacrylate) (co)polymer, and optionally one or more of the suitable additives as defined herein.

The use of plasticizers in coating compositions, in particular in cheese coating compositions is known to depend on the characteristics of the polymer. The skilled person appreciates when to use plasticizers or not, depending on the *T*_{g} of the polymer and the characteristics of the coating composition. This is common practice for the skilled person in the field of cheese manufacture. Depending on the exact composition of the lactic acid polymer fraction, a plasticizer may or may not be required. For example, when the lactic acid polymer fraction comprises a substantial amount of small chain oligomers, hence oligomers comprising 2 - 20 monomeric units, the use of other plasticizers is not necessary, since these small molecules can act as plasticizers themselves. Also the use of plasticizers is usually not necessary if lactic acid copolymers are used. Alternatively, in case a relative small amount of oligomeric ("short chain") lactic acid polymers is present in the lactic acid polymer fraction, the presence of a plasticizer may be desirable in order for the coating composition to have good film forming properties and/or to provide a suitable melt viscosity. Any plasticizer known in the art to be suitable in coating compositions, in particular in cheese coating compositions may be used, for example those mentioned in Commission Regulation (EU) No 10/2011 of 14 January 2011. The skilled person finds further guidance in US 2011/0237710, for selecting plasticizer that are compatible with lactic acid polymers.

Plasticizers that are especially suitable to be used in the coating composition according to the invention preferably are selected from small molecule plasticizers and polymeric plasticizers. Thus, in one embodiment, the coating composition according to the invention or the coating composition to be applied in the method according to the invention comprises a plasticizer selected from small molecule plasticizers and polymeric plasticizers. Small molecule plasticizers to be used in the coating composition according to the invention preferably are selected from, organic esters, such as preferably lactic esters, glycerol esters and citrate esters, and organic acids. In one embodiment, the coating composition according to the invention or the coating composition to be applied in the method according to the invention comprises a small molecule plasticizer selected from lactic esters, glycerol esters, citrate esters and organic acids. Suitable organic esters include esters of C₁-C₅ mono- or polyhydric aliphatic alcohols with aliphatic C₁-C₅ organic acids or aliphatic C₁-C₅ hydroxyacids. For clarity purposes, a C₁ alcohol means methanol, a C₁ organic acid means formic acid, etc. Furthermore, C₃ comprises n-propyl and i-propyl, C₄ comprises n-butyl, sec-butyl, i-butyl and tert-butyl; and C₅ comprises n-pentyl, sec-pentyl, tert-pentyl, isopentyl and neopentyl. Any hydroxyl group may further be present on the alkyl rests at any position. A C₃ hydroxyacid preferably relates to lactic acid. Lactic esters include oligomeric lactic acid, typically comprising 2 - 20, more preferably 3 - 10 monomeric units, as well as C₁-C₅ alkyl esters of lactic acid (e.g. methyl, ethyl, n-propyl or isopropyl esters of lactic acid). Glycerol esters include organic acid esters, preferably a C₁-C₅ organic acid esters of glycerol, more preferably an acetate ester of glycerol. Herein, the glycerol with an monoglycerides, diglycerides or triglycerides, preferably the glycerol ester is an organic acid ester of a monoglyceride. Suitable organic acids include C₁-C₅ organic acids, such as acetic acid, propionic acid and (iso)butyric acid. A specially preferred organic acid to be used as plasticizer is propionic acid because it enhances the antifungal properties of the coating composition. Mixtures of plasticizers may also be used in the coating composition according to the invention. A preferred mixture of plasticizers is a combination of a C₁-C₅ organic acid with any of the organic esters above, such as an ester of lactic acid, glycerol or citrate. Most preferably, an acetic acid ester of monoglyceride is used as plasticizer, optionally in combination with a C₁-C₅ organic acid such as propionic acid.

Polymeric plasticizers are polymers with a low *T*_{g}, which are capable of lowering the *T*_{g} of the lactic acid polymers that is applied according to the method according to the present invention and is comprised in the coating composition according to the present invention. An advantage of the use of polymeric plasticizers is that they do not substantially migrate into the cheese during drying/ripening thereof. Ethylene vinyl acetate copolymers (EVA) having a high vinyl acetate content are known to blend well with lactic acid polymers (see Ma et al., Eur. Polym. J. 2012, 48, 146-154), just as polyethylene adipate (PEA) (see Okamoto et al., Eur. Polym. J. 2009, 45, 2304-2312). Also polyethylene glycol or polypropylene glycol (PEG or PPG, respectively) are found to be suitable polymeric plasticizers for lactic acid polymers. Thus, the polymeric plasticizer is preferably selected from EVA, PEA, PEG and PPG, more preferably the polymeric plasticizer is EVA or PEA, most preferably EVA. In case the polymeric plasticizer is EVA, the vinyl acetate content is preferably in the range of 70 - 95 mol%, more preferably 75 - 93 mol%, most preferably 80 - 90 mol%.

In one embodiment, the coating composition according to the invention or the coating composition to be applied in the method according to the invention comprises one or more further components selected from protective colloids, emulsifiers, colorants, preservatives and anti-oxidants. In a preferred embodiment, the coating composition according to the invention or the coating composition to be applied in the method according to the invention further comprises a protective colloid. A protective colloid is also known as a dispersion aid, and facilitates the formation of the polymer dispersion in an emulsion polymerisation process. The protective colloid is preferably a water-soluble polymer, more preferably a water-soluble polymer of vinyl alcohol, of vinyl pyrrolidone, of ethylene glycol, or of propylene glycol, most preferably the protective colloid is a polyvinyl alcohol. It is preferred that the coating composition comprises a protective colloid, more preferably 1 - 30 wt%, even more preferably 3 - 20 wt%, most preferably 5 - 13 wt% of protective colloids, based on the total solid weight of the coating composition. In one embodiment, the coating composition according to the invention or the coating composition to be applied in the method according to the invention comprises an emulsifier. In one embodiment, the emulsifier preferably is a surfactant. In one embodiment the surfactant is selected from the group consisting of a metal C₅-C₂₅ alkyl sulphate (especially sodium dodecyl sulphate), an oleyl alcohol sulphate, and an oleyl alcohol ethoxylate. In one embodiment, the coating composition comprises at most one emulsifier as defined herein, typically the coating composition comprises one emulsifier.

The coating composition may further comprise colorants, preservatives and/or anti-oxidants. Preferably, the coating composition or the coating composition to be applied in the method according to the invention comprises a colorant, more preferably a colorant selected from carotene, annatto and mixtures thereof. Although the coating composition according to the invention has an intrinsic preservative character, the presence of (further) preservatives is not excluded. Generally, the necessity for preservatives will be reduced as compared with conventional emulsion (co)polymer-based coating compositions. Preferred preservatives to be used in the coating composition according to the invention include fungicides, since the use of bactericides is generally not required in view of the intrinsic preservative character of the coating composition according to the invention. Preferably, the coating composition comprises acetic acid or a salt thereof and/or propionic acid or a salt thereof, natamycin, or a mixture thereof. In this respect it is noted that organic acids may have the function of plasticizer and of preservative at the same time. In one embodiment, the coating composition according to the invention does not comprise a (further) preservative. Suitable anti-oxidants are known in the art and include ascorbic acid and tocopherol. Preferably, the total content of colorants, preservatives, plasticizers and/or anti-oxidants present in the coating composition is in the range of 0.1 - 5 wt%, based on the total weight of the coating composition.

The use of lactic acid polymers as polymers in the coating composition according to the invention, can provide an intrinsic preservative characteristic to the coating composition. Conventional coating compositions usually contain bacteriocins or sources thereof or fungicides or other components, such as lactic acid bacteria, that prevent the growth of pathogenic microorganisms including moulds, *Clostridia, Listeria.* Exemplary is the use of viable lactic acid bacteria, as disclosed in EP 2 543 246. Without being bound to a theory, it is believed that the intrinsic preservative characteristic of the coating composition according to the invention may be associated with small amounts of monomeric lactic acid and/or oligomers thereof, and/or with the lactic acid polymers themselves. The intrinsic preservative characteristic may reside in the carboxylic acid moieties (-COOH) which are present in monomeric lactic acid as well as in oligomers and polymers thereof (typically as end group). Such carboxylic acid groups, which are not bound within the polymer chain as ester moieties, are referred to as "free carboxylic acid groups". Likewise, the corresponding base is referred to as a "free carboxylate group". Such carboxylic acid groups are capable of dissociating into the conjugate base by release of a proton and may thus be considered to collectively form the undissociated lactic acid concentration within the coating composition. In a preferred embodiment, monomeric lactic acid (also referred to as free lactic acid), more preferably undissociated lactic acid, is present in the coating composition, which has a preservative effect against unwanted microorganisms and prevents pathogens such as *Clostridia* and *Listeria* to grow on the coating, even when a carbon source such as protective colloids is present. Thus in one embodiment, in the method according to the invention, the lactic acid polymers in the aqueous coating composition that is applied to the surface of a cheese comprises detectable amounts of free lactic acid at the time of application.

Thus, in a preferred embodiment, the coating composition according to the invention comprises free carboxylic acid and/or free carboxylate groups, preferably free carboxylic acid groups, in a total concentration of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l, wherein the concentration of free carboxylic acid groups or of free carboxylate groups, respectively, is typically determined using titration. Such concentration of free carboxylic acid and/or free carboxylate groups provides the coating composition according to the invention with the preservative effect. In a yet more preferred embodiment, the coating composition according to the invention comprise lactic acid or salts thereof in a total concentration of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l. Most preferably, the coating composition according to the invention or the coating composition to be applied in the method according to the invention comprises undissociated lactic acid (HLac) in a concentration of at least 0.001 mol/l, more preferably in a concentration of at least 0.05 mol/l. A typically concentration of undissociated lactic acid in the coating composition is in the range of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l. K.A. Presser et al. (Applied and Environmental Microbiology, 1997, 63, 2355-2360) have found that a concentration of 10 mM of undissociated lactic acid can be enough to inhibit growth of *E. coli* even at pH > 4.5. The total concentration of lactic acid or salts thereof (i.e. undissociated and dissociated) was herein 0.025 mol/l or above. The pH of the coating composition according to the invention or the coating composition to be applied in the method according to the invention can be adjusted accordingly and is preferably in the range of 1.0 - 7.0, preferably 2.0 - 5.0.

The authors of EP 2 543 246 have not described this intrinsic preservative effect on microbiological storage stability. Thus, the coating composition according to the invention most preferably does not comprise an added source of a lactic acid bacteria. In the context of the present invention, "no added source of lactic acid bacteria" refers to the absence of externally added lactic acid bacteria. Since lactic acid bacteria may be prevalently present in dairy processing facilities, which may infect the coating composition according to the invention, some traces of lactic acid bacteria may be present in the coating composition without departing from the present invention. Typically, the coating composition or the coating composition to be applied in the method according to the invention comprises less than 10⁵ cfu lactic acid bacteria per g of coating composition, more preferably less than 10⁴ cfu/g, even more preferably less than 10³ cfu/g or even less than 10² cfu/g. In a preferred embodiment, the coating composition comprises no detectable amounts of, or at least no added viable lactic acid bacteria. Additionally, the coating composition according to the invention preferably does not comprise natamycin or an added source thereof or a sorbate and/or a bacteriocin or an added source thereof. In an especially preferred embodiment, the coating composition according to the invention does not comprise bacteriocin or an added source thereof, and does not comprises an added source of lactic acid bacteria. Accordingly, the coating composition may prevent the growth of undesired microorganisms during storage of the coating composition and/or during ripening of the cheese without the need of components specifically added for that reason.

The coating composition may also be referred to as "water-borne". The pH of the coating composition is preferably in the range of 1 - 7, more preferably 2.5 - 6.0, most preferably 4.0 - 5.0. The coating composition is generally acidic and may have a pH which may be lower than usually desired, e.g. a pH in the range of 1 - 2. The skilled person will appreciate that a small amount of base, usually an aqueous NaOH solution, may be added to the dispersion in order to increase the pH to the desired level.

Two different embodiments of the coating composition are especially preferred. In one embodiment, the coating composition has a pH of between 1 and 4.5, more preferably of between 2.5 and 4.0 and the coating composition comprises less than 50 ppm or preferably no natamycin and furthermore comprises less than 500 ppm or preferably no sorbic acid or salts thereof. The coating composition preferably comprises a total concentration of lactic acid or salts thereof of 0.01 - 3 mol/l, more preferably a total concentration of 0.05 - 1 mol/l, most preferably a total concentration of 0.1 - 1 mol/l. The coating composition may optionally comprise propionic acid and/or acetic acid or salts thereof. Such a coating composition has excellent bacteriostatic properties against many pathogens such as *E. coli* during storage on account of its low pH and the presence of lactic acid. The low pH furthermore has an intrinsic fungicidal effect against many moulds and yeasts. The cheese coating is advantageously essentially free of the artificial fungicides sorbate and natamycin.

Another preferred coating composition has a pH of between 4.0 - 7, more preferably of between 4.5 - 6.5 and comprises natamycin, preferably at a concentration of 50 ppm or higher. Preferably, the coating composition comprises a concentration of undissociated lactic acid or salts thereof of 0.01 - 3 mol/l, more preferably a concentration of 0.025 - 1 mol/l, most preferably a total concentration of 0.1 - 0.5 mol/l. The coating composition may optionally comprise propionic acid and/or acetic acid or salts thereof. This coating composition has acceptable storage stability on account of the presence of a minimum amount of undissociated lactic acid and has good fungicidal properties on the cheese.

For suitable application of the coating composition onto the cheese, it is preferred that the coating composition according to the invention has a Brookfield viscosity of at most 50000 mPa.s, more preferably at most 10000 mPa.s, most preferably at most 5000 mPa.s, wherein the Brookfield viscosity is determined according to ISO 2555. In this method, the viscosity of the coating composition is measured at 23 °C using a Brookfield viscometer type LVDV-E operated at speed 30 rpm using spindle number 4. The viscosity meter is levelled and the spindle is attached to the apparatus. The spindle is then immersed into the sample up to the mark on the spindle. The measurement is started and the result is taken at steady state or after one minute. Preferably, the Brookfield viscosity of the coating composition thus determined is in the range of 10 - 10000 mPa.s, more preferably in the range of 100 - 5000 mPa.s, most preferably in the range of 500 - 5000 mPa.s. It has been found that higher viscosities are more difficult to produce in melt dispersion processes without negatively affecting the stability of the coating compositions. Preferably, the coating composition has a Brookfield viscosity which is stable in time.

The total solid content of the coating composition according to the invention is preferably at least 5 wt%, preferably 20 - 70 wt%, more preferably 25 - 50 wt%, most preferably 33 - 48 wt%, based on total weight of the composition. In one embodiment, the total solid content is less than 40 wt%, typically less than 25 wt% or even less than 20 wt%. Herein, the total solid content is defined as the total weight of the composition minus the total weight of water. The total solid content is preferably determined at the time the coating composition is applied onto the cheese in the method according to the invention.

In one embodiment, the coating composition according to the invention is not obtained by mixing and emulsifying a polylactic acid-based resin with a biodegradable emulsifier and then adding a biodegradable plasticizer at ≤ 100 °C. Within the context of this embodiment, the process of obtaining the coating composition is typically as defined in JP 2004107413. In one embodiment, the coating composition according to the invention does not contain triacetin, glycerol di-aceto acid monolaurate, acetyl tributyl citric acid or tributyl acetyl citrate. In one embodiment, the coating composition according to the invention does not contain lactic acid polymers having an *M*_{w} of 170000.

In one embodiment, the coating composition according to the invention does not contain both of (i) more than 0.015 wt%, preferably more than 0.01 wt% of an anionic emulsifier, based on total weight of the lactic acid polymers, and (ii) more than 25 wt%, preferably more than 10 wt% of a non-ionic emulsifier, based on total weight of the anionic emulsifier. Most preferably, the coating composition according to the invention does not contain both of an anionic emulsifier and a non-ionic emulsifier, or in other words, in case an anionic emulsifier is present preferably no non-ionic emulsifier is present and in case a non-ionic emulsifier is present preferably no anionic emulsifier is present. In the context of this embodiment, the terms "anionic emulsifier" and "non-ionic emulsifier" are typically interpreted as defined in JP 2004323640. In one embodiment, the coating composition according to the invention is not obtained by emulsifying the lactic acid polymers dissolved in organic solvent at a temperature of 0 - 60 °C in the presence of anionic emulsifier and non-ionic emulsifier. In the context of this embodiment, the terms "anionic emulsifier" and "non-ionic emulsifier" are typically interpreted as defined in JP 2004323640.

In one embodiment, the coating composition according to the invention does not contain lactic acid polymer which is poly-L-lactic acid and/or poly-D-lactic acid. In one embodiment, the coating composition according to the invention does not contain two distinct organic solvents, typically not two distinct organic solvents having (i) limited solubility with respect to water and/or (ii) a boiling point of 100 °C or more.

In one embodiment, the coating composition according to the invention does not contain both of (i) more than 0.8 wt%, preferably more than 0.5 wt% of a polyoxyethylene-polyoxypropylene block-copolymer group surfactant, and (ii) more than 4 wt%, preferably more than 3 wt% of an ammonia or an organic amine. In one embodiment, the coating composition according to the invention is not obtained using an organic solvent, typically no amphiphilic organic solvent such as tetrahydrofuran. In one embodiment, the coating composition according to the invention is not obtained by heating a raw material comprising lactic acid polymers, 1 - 30 wt% a polyoxyethylene-polyoxypropylene block-copolymer group surfactant, 5 - 30 wt% an ammonia or an organic amine, amphiphilic organic solvent and water and subsequently mixing the raw material with 1 - 50 wt% plasticizer and removing the amphiphilic organic solvent. Herein, the wt% values are based on the lactic acid polymers, and the amount of amphiphilic organic solvent is typically 5 - 40 wt%, based on total weight of lactic acid polymers, surfactant, amine, organic solvent, water and plasticizer. In one embodiment, the coating composition according to the invention does not contain polylactic acid having an *M*_{w} of 140000, a glass transition temperature of 57 - 59 °C, a softening point of 107 °C and a D-lactic acid content of 9.7 mol%.

In one embodiment, the coating composition according to the invention does not comprise both of (i) more than 0.25 wt%, preferably more than 0.2 wt% of a silane coupling agent and (ii) more than 0.35 wt%, preferably more than 0.3 wt% of a lubricant. Most preferably, the coating composition according to the invention does not contain both of a silane coupling agent and a lubricant, or in other words, in case a silane coupling agent is present preferably no lubricant is present and in case a lubricant is present preferably no silane coupling agent is present. Herein, the terms "silane coupling agent" is typically interpreted as defined in WO 2011/024021. In one embodiment, the coating composition according to the invention does not comprise a surfactant from the group consisting of Empilan 2502, Genapol 0120, Lutensol AT80 and Demofeel PP. In one embodiment, the coating composition according to the invention does not comprise a surfactant from the group consisting of Synperonic POF68 and Brij700. In one embodiment, the coating composition according to the invention does not comprise a plasticizer from the group consisting of PEG6000, TAG and TBC. In one embodiment, the coating composition according to the invention does not contain: (i) 2.5 wt% Empilan 2502, 2.5 wt% Synperonic POF68 and 7.5 wt% PEG6000; (ii) 2.5 wt% Empilan 2502, 7.5 wt% Synperonic POF68 and 7.5 wt% PEG6000; (iii) 2.5 wt% Empilan 2502, 7.5 wt% Synperonic POF68 and 2.5 wt% PEG6000; (iv) 2.5 wt% Genapol 0120, 7.5 wt% Synperonic POF68 and 2.5 wt% PEG6000; (v) 2.5 wt% Lutensol AT80, 7.5 wt% Synperonic POF68 and 2.5 wt% PEG6000; (vi) 5 wt% Demofeel PP, 5 wt% Synperonic POF68 and 7.5 wt% PEG6000; (vii) 2.5 wt% Empilan 2502, 7.5 wt% Synperonic POF68 and 7.5 wt% TAG; (viii) 5 wt% Empilan 2502, 5 wt% Brij700 and 5 wt% TAG; (ix) 2.5 wt% Empilan 2502, 7.5 wt% Synperonic POF68 and 7.5 wt% TBC; (x) 5 wt% Empilan 2502, 5 wt% Synperonic POF68 and 5 wt% PEG6000; or (xi) 2.5 wt% Empilan 2502, 7.5 wt% Brij700 and 5 wt% PEG6000.

In one embodiment, the coating composition according to the invention does not contain kaolin or calcium, in particular it does not contain any filler. In the context of this embodiment, the filler is typically as defined in JPH0978494. In one embodiment, the coating composition according to the invention contains less than 1.5 wt%, more preferably less than 1 wt% rosin (or colophony), based on total weight of the lactic acid polymers. Most preferably, the coating composition contains no rosin. In one embodiment, the coating composition according to the invention contains less than 5 wt%, more preferably less than 2 wt %, most preferably no abietic acid, based on total weight of the lactic acid polymers. In one embodiment, the coating composition according to the invention does not contain 1 - 40 wt% of an ether-ester type plasticizer, based on weight of the lactic acid polymers. In the context of this embodiment, the ether-ester type plasticizer is typically as defined in JP 2011/148888. In one embodiment, the coating composition according to the invention contains less than 45 wt%, more preferably less than 25 wt%, more preferably less than 5 wt% polyester urethane having a *M*ₙ of 10⁵, based on total weight of the lactic acid polymers. Most preferably, the coating composition contains no polyester urethane having a *M*ₙ of 10⁵. In one embodiment, the coating composition according to the invention is not prepared by forming a mixture of the lactic acid polymer, plasticizer, dispersion aids and water, heating said mixture in order to obtain a paste-like composition and diluting said paste-like composition in water.

The coating composition according to the invention or the coating composition to be applied in the method according to the invention may be prepared according to any means known in the art. Suitably, the composition is prepared or obtainable by melt dispersion in the presence of protective colloids, suitably polyvinylalcohol, which act as dispersion aids. Melt dispersion typically occurs by mixing the lactic acid polymers, optionally a plasticizer and the protective colloids with water at a temperature that is sufficiently high to melt at least part of the lactic acid polymers. In one embodiment, the temperature at which melt dispersion is carried out does not exceed 150 °C, preferably not 140 °C. The dispersion obtained as such comprises the protective colloids, which thus end up in the coating composition of the invention. Even though these protective colloids are an excellent carbon source for unwanted microorganisms to grow on, the intrinsic preservative characteristic of the coating composition according to the invention minimizes the growth of unwanted microorganisms even when protective colloids are present therein. Nevertheless, it is advisable to store the dispersion at reduced temperature, typically below 15 °C and above freezing temperatures. The above process, also known as melt dispersion and also referred to as "aqueous melt dispersion", is known in the art e.g. from WO 98/029477, which is incorporated by reference herein in its entirety. Alternatively, the lactic acid polymers may be dispersed in water in the presence of an emulsifier, preferably sodium dodecyl sulphate. Melt dispersion is preferred for the preparation of the coating composition according to the invention.

In a preferred embodiment, the coating composition is post-treated by applying shear forces, preferably using an Ultra-Turrax treatment, which is a known method in the art to reduce the particle size of the dispersions, wherein the dispersion is vigorously agitated or stirred for a certain period of time. Ultra-Turrax post-treatment is preferably performed at a temperature of 50 - 100 °C and a duration of 1 - 30 min. Compositions containing small particles of lactic acid polymers are advantageous for the coating composition according to the invention, since small particles reduce sedimentation of the lactic acid polymers, and thus increase the stability of the coating composition. It should be noted that some sedimentation during storage is not detrimental to the usability of the coating composition, as the sediment may be readily redispersed by agitating the composition (e.g. by shaking or stirring) prior to application to a surface of a cheese.

A further advantage of the coating composition according to the invention is that no aromatic hydrocarbons, aliphatic hydrocarbons and chlorinated solvents are needed for their preparation. It is thus preferred that no aromatic hydrocarbons, aliphatic hydrocarbons and chlorinated solvents are used in the preparation of the coating composition according to the invention or the coating composition to be applied in the method according to the invention. Likewise, it is preferred that the coating composition according to the invention is essentially free of aromatic hydrocarbons, aliphatic hydrocarbons and chlorinated solvents. In one embodiment according to the invention, the coating composition does not contain any organic solvent, preferably the coating composition does not comprise any other solvent than water.

### Coated cheese

The present invention also relates to a coated cheese obtainable by the method according to the invention, preferably obtained by the method according to the invention.

The coated cheese according to the invention is characterized by a coating of a dry film comprising lactic acid polymers as defined above for the coating composition. The dry film as obtained by the method according to the invention typically has a main *T*_{g} in the range of 5 - 37 °C, more preferably 10 - 25 °C, even more preferably 13 - 21 °C, most preferably 14 - 19 °C. The dry film may also exhibit a second *T*_{g}, preferably of 10 °C or lower, and/or of 37 °C or higher. The *T*_{g} (glass transition temperature) is preferably determined using differential scanning calorimetry. The method for determining the *T*_{g} of a polymer that is to be included in the coating composition according to the invention is disclosed in DIN 53765, version March 1994, with the following modification: the heating and cooling rates are set at 10 K/min instead of at 20 K/min and wherein the sample size ranges between 5 - 10 mg. The film is dried at 100 °C for 1 hour immediately before measuring the *T*_{g}*.*

The dry film further typically has a strain at maximum load in the range of 50 - 500 % and/or a stress at maximum load of 0.5 - 10 MPa (measured as the tensile strength (Instron 1405 testing machine, 50 mm/min, 23 °C, 50 % relative humidity) of the films), more preferably a stress at maximum load of 1 - 6 MPa. The dry film further typically has a water vapour transmission rate in the range of 30 - 1000 g/(m²·day) as measured by the "cup method", wherein the film is spanned over a cup with water in an environment of 23 °C and 50% relative humidity, and the evaporation (in g water per day per m²) of water is determined by weighing the cup. The WVTR is normalized to a film thickness of 300 µm.

### Examples

The following examples are intended to illustrate the invention.

### Example 1 - Dispersion formation

Two batches of lactic acid homopolymers (PLA1 and PLA2) were prepared by polycondensation of racemic lactic acid (DL-lactic acid) according to known methods. 1 kg of DL-lactic acid and 0.45 g of stannous octoate were weighed into a bench scale Juchheim reactor. Nitrogen flow was inserted into the reactor, and the temperature was gradually increased to 180 °C while distilling water out of the reaction mixture. After the water formation stopped, the reaction pressure was reduced and the reaction was carried on overnight. The glass transition temperatures of these polymers are given in Table 1, as well as for the commercially available polymer Ingeo 4060D (NatureWorks).

**Table 1: polymer characteristics**

| Entry | Structure | *T*_{g} (°C) ^{[a]} |
|---|---|---|
| PLA1 | PLA homopolymer | 38 |
| PLA2 | PLA homopolymer | 38 |
| Ingeo | PLA homopolymer | 58 |

| | | |
|---|---|---|
| [a] Measured according to DIN 53765, version March 1994, with the following modification: the heating and cooling rates are set at 10 K/min instead of at 20 K/min and wherein the sample size ranges between 5 - 10 mg. | | |

Dispersions were prepared with a thermo-mechanical method as described in WO 98/029477 entitled "Process for the preparation of polymer dispersions" (applicant: VTT). The PLA polymer, plasticizer (if applicable) and/or additional polymer (if applicable) were placed into a glass reactor with a mechanical stirrer. The components were melted at suitable temperature (between 90 °C and 180 °C, see Table 2) until a homogeneous melt was obtained. The temperature of the melt was adjusted to 90 - 120 °C, after which Mowiol 40-88 (polyvinyl alcohol, PVOH) solution (10 wt%) was slowly added under refluxing conditions and constant stirring. The final content of Mowiol was 10 wt% of the combined amount of polymer + plasticizer. At some point during the Mowiol/water addition, a dispersion with aqueous continuous phase and micrometer scale polymeric particles was formed. The solid content of the dispersion was adjusted to 40 wt%. The prepared dispersions D1 - D18 are listed in Table 2, together with their stability, pH and *T*_{g} (of most dispersion, not all have been determined). *T*_{g} values were determined from the melt before addition of water/PVOH, according to a modified version of DIN 53765 (see Table 1, footnote [a]).

Stable dispersion with the lactic acid polymers were formed with a variety of plasticizers (or even no plasticizer), both small molecule plasticizers and polymeric plasticizers, at various concentrations. The pH of all the prepared dispersions was generally low, probably due to lactic acid (and/or lactic acid oligomers) present in the dispersion. Glycerol and lauric acid were less preferred as plasticizer, as they did not cause a significant lowering of the *T*_{g}*.* Two distinct *T*_{g} values were observed for D11.

**Table 2: Prepared dispersions**

| Entry | Components ^{[a]} | Stab. ^{[b]} | *T*(°C)^{[c]} | pH | *T_{g}*(°C) |
|---|---|---|---|---|---|
| D1 | PLA1 | Y | 100 | 2.8 | 38 |
| D2 | PLA1 + 23 % triacetin | Y | 100 | 2.3 | -2 |
| D3 | PLA1/Ingeo (7/3) + 23 % triacetin | Y | 160 | 2.2 | 5 |
| D4 | PLA2 + 15 % triacetin | Y | 90 | 2.26 | 11 |
| D5 | PLA2 + 10 % triacetin | Y | 90 | 2.06 | 18 |
| D6 | PLA2 + 5 % triacetin | Y | 90 | 2.1 | 27 |
| D7 | PLA2 + 23 % PA | Y | 90 | 2.18 | -4 |
| D8 | PLA2 + 10 % PA | Y | 110 | 2.12 | |
| D9 | PLA2 + 23 % acetem | Y | 120 | 2.18 | -7 |
| D10 | PLA2 + 10 % acetem | Y | 120 | 2.16 | 16 |
| D11 | PLA2 + 23 % soft-n-safe | Y | 120 | 2.17 | -5 / 14 |
| D12 | PLA2 + 10 % soft-n-safe | Y | 120 | 2.17 | 15 |
| D13 | PLA1 + 23 % cremophor | Y | 100 | 2.4 | |
| D14 | PLA2 + 23 % glycerol | Y | 90 | 2.5 | 34 |
| D15 | PLA2 + 23 % lauric acid | Y ^{[d]} | 90 | 2.23 | 30 |
| D16 | PLA2 + 23 % PEA | Y | 90 | 2.3 | 13 |
| D17 | PLA2/EVA89 (7/3) | Y | 160 | 2.06 | 32 |
| D18 | PLA2/EVA80 (7/3) | Y | 160 | 2.07 | 26 |

| | | | | | |
|---|---|---|---|---|---|
| [a] Total lactic acid polymer content adds up to 100 wt%, plasticizer content is in wt% based on lactic acid polymer content. PA = propionic acid; PEA = poly(ethylene adipate); EVA = ethylene-vinyl acetate copolymer (80 % or 89 % vinyl acetate monomers). [b] Stability of the dispersion: Y = Yes, stable; N = No, not stable. [c] Temperature of homogeneous melt during preparation of the dispersion. [d] The composition was a paste at 40 % total solid, but after dilution to 26 % total solid a stable dispersion was formed. | | | | | |

### Example 2 - Film formation

Dispersions D2 - D13 and D16 - D18 obtained in example 1 were subjected to film formation experiments, together with control dispersions C1 and C2. Films were drawn from the dispersions (40 wt% solids content) with a 500 µm bar coater. The films were dried at RT overnight and the quality of the film was checked by optical microscopy (40 × enlargement). Furthermore, the tensile strength (Instron 1405 testing machine, 50 mm/min, 23 °C, 50 % relative humidity) of the films was determined. The water vapour transmission rate (WVTR) of the films was determined with the "cup method", wherein the film was spanned over a 250 mL cup with containing 100 mL water, sealed hermitically to the rim of the cup with a rubber band and placed in a controlled atmosphere of 23 °C and 50 % relative humidity. The evaporation (in g water per 24 h per m²) of water was determined by weighing the cup after 5 and 9 days. The film thickness was measured at ten points in the film and averaged, and the WVTR was normalized to a film thickness of 300 µm. The results are displayed in Table 3, using the same numbers as for the dispersions in Table 2.

The mechanical properties (maximal stress and strain values) and WVTR of the formed films are similar to those of conventional polyvinyl acetate-based cheese coatings, indicating that the lactic acid polymer-based cheese coatings according to the present invention are an excellent renewable and environmentally friendly alternative to petrochemical-based coatings such as polyvinyl acetate coatings. Notably, the lactic acid polymer-based films had comparable characteristics to PVA-based control films C1 - C2 (see Table 3), which were prepared according to the same procedure as described in Examples 1 and 2.

**Table 3: Prepared films**

| Entry | Components | Film ^{[a]} | stress ^{[b]} | strain ^{[c]} | WVTR ^{[d]} |
|---|---|---|---|---|---|
| D2 | PLA1 + 23 % triacetin | Y | 1.2 | 170 | 124 / 128 |
| D3 | PLA1/Ingeo (7/3) + 15 % triacetin | Y | 2.4 | 170 | 78 / 76 |
| D4 | PLA2 + 15 % triacetin | Y | 1.9 | 360 | 62 / 54 |
| D5 | PLA2 + 10 % triacetin | Y | 1.8 | 420 | 50 / 45 |
| D6 | PLA2 + 5 % triacetin | Y | 4.6 | 240 | |
| D7 | PLA2 + 23 % PA | Y | 1.8 | 290 | |
| D8 | PLA2 + 10 % PA | Y | 4 | 550 | 62 / 54 |
| D9 | PLA2 + 23 % acetem | Y | 1.7 | 370 | 96 / 89 |
| D10 | PLA2 + 10 % acetem | Y | | | 75 / 75 |
| D11 | PLA4 + 10 % acetem | Y | | | |
| D12 | PLA2 + 23 % soft-n-safe | Y | 1.6 | 350 | 95 / 93 |
| D13 | PLA2 + 10 % soft-n-safe | Y | 3.2 | 370 | 50 / 48 |
| D16 | PLA2 + 23 % PEA | Y | 2 | 1.8 | 87/79 |
| D17 | PLA2/EVA89 (7/3) | Y | 4.9 | 330 | |
| D18 | PLA2/EVA80 (7/3) | Y | 4.6 | 450 | 60 / 53 |
| C1 | PVA-DBM | Y | 4.7 | 310 | 179 / 179 |
| C2 | EVA | Y | 1.3 | 330 | 189 / 196 |

| | | | | | |
|---|---|---|---|---|---|
| [a] Film formation at room temperature: Y = Yes; N = No. [b] Stress at max. load (MPa). [c] Strain at max. load (%) [d] Water vapour transmission rate (g/24 h.m² based on film of 300 µm thick). Values at day 5 (left) and day 9 (right) are given. | | | | | |

### Example 3 - Cheese coating studies

Cheese coating studies were performed with five dispersions. The dispersion were prepared in the same way as described in Example 1, but at a larger scale (i.e. on 1 kg scale vs 100 mL scale in Example 1).
- Dispersion 1 contained a co-polymer of DL-lactic acid with 10 mol% adipic acid and 10 mol% 1,2-propanediol, prepared in the same way as homopolymers PLA1 and PLA2 (Example 1), with the addition of the comonomers. This co-polymer had a *T*_{g} of 8 °C. Dispersion 1 had a pH of 2.15 and a total solid content of 48 wt%.
- Dispersion 2 contained a co-polymer of DL-lactic acid with 5 mol% sebacic acid and 5 mol% 1,2-propanediol, prepared in the same way as homopolymers PLA1 and PLA2 (Example 1), with the addition of the comonomers. This co-polymer had a *T*_{g} of 11 °C. Dispersion 2 had a pH of 2.14 and a total solid content of 48 wt%.
- Dispersion 3 contained a homopolymer of DL-lactic acid, prepared in the same way as homopolymers PLA1 and PLA2 (Example 1) and 10 wt% acetem, based on the weight of the lactic acid polymer. The melt of polymer and plasticizer had a *T*_{g} of 7 °C. Dispersion 3 had a pH of 2.12 and a total solid content of 40 wt%.
- Dispersion 4 contained a homopolymer of DL-lactic acid, prepared in the same way as homopolymers PLA1 and PLA2 (Example 1), together with 5 wt% acetem and 5 wt% propionic acid, both based on the weight of the lactic acid polymer. The melt of polymer and plasticizer had a *T*_{g} of 11 °C. Dispersion 4 had a pH of 2.18 and a total solid content of 40 wt%.
- Dispersion 5 contained a homopolymer of DL-lactic acid, prepared in the same way as homopolymers PLA1 and PLA2 (Example 1). The polymer a *T*_{g} of 40 °C. Dispersion 5 had a pH of 2.1 and a total solid content of 45 wt%.

Cheese coating compositions were prepared from dispersions 1 - 5, by addition of NaOH (5 N, aq), annatto (Annatto WS ex CSK Food Enrichment BV, 1.2 ml) and natamycin (1000 ppm) according to Table 4. pH, Brookfield viscosity (determined according to ISO 2555), *T*_{g} (determined according to Table 1, footnote [a]) and total solid content of the cheese coating compositions are also given in Table 4. Dispersion 5 was used as a 30/70 (w/w) mixture with reference cheese coating, a conventional poly(vinyl acetate-co-dibutylmaleate) based CeskaCoat® WL 01.1000.30 ex CSK Food Enrichment BV. A 5 kg Dutch cheese, flat cylindrical model, having a fat content in the solid matter content of 50%, is taken out of the brine bath and coated as follows: Approximately 3 to 4 days after production, within a few hours after coming out of the brine, the cheeses were placed on wooden shelves, and by manual application (using a sponge) received a thin coating layer on the top half of the cheese as well as on the sides. The amount of coating which is applied in one run ranges (on average) between 5 and 10 g (on total weight of the coating composition). The coating is allowed to dry for between one to three days, the cheeses are turned on the shelves and the procedure is repeated until the cheeses reach an age of 29 days after production. More precisely, the cheese was turned and subsequently subjected to half-side coating at day 4, 7, 10, 13, 15, 17, 19, 22 and 25 after production. The storage conditions are controlled at a temperature of 13 ± 1 °C and at a relative humidity of 88 ± 3 %.

The performance of the coatings was assessed and the results thereof are summarized in Table 5 and Figure 1, as well as those of the control cheese coating being CeskaCoat® WL 01.1000.30. The extent the coating stuck to the shelf during storage ("Tack"), the gloss of the coating and the extent of damage of the coatings that occurred during storage was assessed. Furthermore, a drop test was performed involving dropping the cheese (the base of the cheese cylinder making a 90 degree angle to the ground) on the ground from a height of 1 meter and the type of damage that occurred is also presented in table 5. Figure 1 depicts the dehydration of the cheeses during storage. Some dehydration always occurs, but this is preferably kept at a minimum. The weight of the cheese at day 4 was used as starting point, and the weight loss of the coated cheeses during storage is given in Figure 1. All coatings performed satisfactory, in that they performed equally well or sometimes even better compared to the control coating in at least one of the tested aspects.

As a final remark, these formulated dispersions which were prepared on large scale were preferably stirred up prior to application on cheese in case some sedimentation had occurred. It is likely that the stability can be improved by increasing the amount of shear.

**Table 4: Formulation and characteristics of the cheese coating compositions**

| Dispersion (weight) | NaOH (ml) | pH | Viscosity (mPa.s) | TS (wt%) | *T*_{g} (°C) |
|---|---|---|---|---|---|
| 1 (594 g) | 45 | 4.50 | 2100 | 45.5 | 8 |
| 2 (587 g) | 50 | 4.44 | 1800 | 15.4 | 11 |
| 3 (589 g) | 65 | 4.37 | 200 | 39.1 | 6 |
| 4 (580 g) | 60 | 4.29 | 300 | 40.6 | 7 |
| 5 (589 g) | 32 | 4.59 | 1100 | 40.3 | 15 |

**Table 5: Results of the cheese coating studies**

| Dispersion | Tack | Gloss | Damage | Drop test |
|---|---|---|---|---|
| 1 | some | good | some | no cracks |
| 2 | some | good | some | some cracks |
| 3 | no | reasonable | no | small lines |
| 4 | no | reasonable | no | small lines |
| 5 | no | bad | no | some cracks |
| Control | slight | good | some | some cracks |

### Example 4 - Lactic acid polymer degradation

The hydrolytic degradation of lactic acid polymers within the dispersions of Examples 1 and 3 was tested. The molecular weight distribution of the lactic acid polymers was monitored over time using size exclusion chromatography (SEC). SEC experiments are performed in DMSO and the results are calibrated against poly(methyl methacrylate) standards.

From the fresh dispersions of Example 1, 2 - 4 days after their preparation, a film was cast as described for Example 2 and stored at room temperature. The dispersion was stored at 5 °C, and 2 - 4 weeks after preparation of the dispersion, the number-averaged molecular weight (*M*ₙ) of the polymer in the aged dispersion was measured as well as the *M*ₙ of the polymer in the fresh dispersion (i.e. of the film) by SEC. A general trend was clear that the *M*ₙ was slightly reduced in the film / fresh dispersion, compared to the aged dispersion, indicating that within the film at room temperature slightly more degradation of lactic acid polymers occurs then in the dispersion at 5 °C. Also, in all films, the *M*ₙ was slightly reduced (typically a 10 - 20 % reduction was observed) compared to the *M*ₙ of the original polymer, indicating that indeed degradation of the lactic acid polymer occurs slowly over time.

Lactic acid polymer degradation was also investigated for Dispersions 1 - 5 of Example 3. The *Mₙ* of the original polymers was determined, as well as of the dispersions 1 - 5, without addition of NaOH (aq), annatto and natamycin, after storage of 1 - 2 months at room temperature. For dispersions 1 and 2, the *M*ₙ of a film prepared with fresh dispersions and after storage of the film at 5 °C for 1 - 2 months was also determined. For Dispersion 1, the *M*ₙ of 7300 g/mol of the original polymer reduced to 6900 g/mol for the film and to 4400 g/mol for the dispersion after storage. For Dispersion 2, the *Mₙ* of 6500 g/mol of the original polymer reduced to 5000 g/mol for the film and to 3400 g/mol for the dispersion after storage. For Dispersion 3, the *M*ₙ of 5600 g/mol of the original polymer reduced to 3000 g/mol for the dispersion after storage. For Dispersion 4, the *M*ₙ of 5600 g/mol of the original polymer reduced to 2800 g/mol for the dispersion after storage. For Dispersion 5, the *M*ₙ of 8200 g/mol of the original polymer reduced to 6100 g/mol for the dispersion after storage.

Such reduction of the *M*ₙ is indicative of degradation of the lactic acid polymers, thereby reducing the polymer length and cleaving of low molecular weight lactic acid species, such as lactic acid oligomers and free lactic acid. Such degradation also occurs in the films, albeit to a smaller extent than in the dispersions. The presence of the low molecular weight lactic acid species in the dispersions and especially in the coatings ensure that the cheese coating compositions according to the invention have an intrinsic preservative character.

## Claims

1. A method for coating a cheese, comprising applying an aqueous coating composition to the surface of a cheese, wherein the coating composition comprises at least 5 wt% of lactic acid polymers dispersed in an aqueous phase, and optionally a plasticizer, wherein:
(i) the coating composition does not comprise an added source of lactic acid bacteria, and/or
(ii) the coating composition comprises free carboxylic acid and/or free carboxylate groups, preferably free carboxylic acid groups, in a total concentration of 0.001 - 5 mol/l.

2. The method according to claim 1, wherein the lactic acid polymers comprise at least 50 mol% of D-lactic acid and/or L-lactic acid monomeric units and optionally further monomeric units.

3. The method according to claim 2, wherein the lactic acid polymers comprise further monomeric units selected from aliphatic hydroxycarboxylic acids, aliphatic diols, aliphatic dicarboxylic acids and mixtures thereof, preferably the lactic acid polymers comprise an aliphatic diol and/or an aliphatic dicarboxylic acid as further monomeric unit.

4. The method according to claim 3, wherein the aliphatic diol is selected from the group consisting of 1,2-ethanediol, 1,3-propanediol, 1,4-butanediol, 1,2-propanediol, 1,2-butanediol, 1,3-butanediol, 2,3-butanediol and mixtures thereof, and/or wherein the aliphatic dicarboxylic acid is selected from the group consisting of succinic acid, adipic acid, sebacic acid, azelaic acid, n-dodecanedioic acid and mixtures thereof.

5. The method according to any one of claims 2 - 4, wherein the lactic acid polymers comprise 90 - 98 mol% D-lactic acid and/or L-lactic acid monomeric units and 2 - 10 mol% further monomeric units.

6. The method according to any of the preceding claims, wherein the lactic acid polymers comprise D-lactic acid and L-actic acid monomeric units in a D-lactic acid to L-lactic acid molar ratio in the range of 80:20 - 20:80, preferably 70:30 - 30:70, more preferably 55:45 - 45:55.

7. The method according to any of the preceding claims, wherein the coating composition comprises a plasticizer selected from small molecule plasticizers and polymeric plasticizers, preferably a small molecule plasticizer selected from lactic esters, glycerol esters, citrate esters and organic acids.

8. The method according to any of the preceding claims, wherein the coating composition comprises detectable amounts of free lactic acid at the time of application.

9. The method according to any of the preceding claims, wherein the maximum allowable level of lactic acid bacteria in the coating composition is 10⁵ cfu/g coating composition, preferably 10³ cfu/g.

10. The method according to any of the preceding claims, wherein the coating composition comprises 0.1 - 15 wt% plasticizer, relative to the weight of lactic acid polymers.

11. The method according to any of the preceding claims, wherein the coating composition comprises 30 - 50 wt%, preferably 35 - 45 wt%, of the combined content of lactic acid polymers and plasticizer, relative to the total weight of the coating composition.

12. The method according to any of the preceding claims, wherein the coating composition further comprises protective colloids, preferably wherein the protective colloids comprise a water-soluble polymer, preferably a water-soluble polymer of vinyl alcohol, vinyl pyrrolidone, ethylene glycol or propylene glycol.

13. A coated cheese obtainable by the method according to any of the preceding claims.

14. An aqueous food coating composition, comprising at least 5 wt% lactic acid polymers dispersed in an aqueous phase, protective colloids and optionally a plasticizer, and wherein:
(i) the food coating composition does not comprise an added source of lactic acid bacteria, and
(ii) the food coating composition comprises free carboxylic acid and/or free carboxylate groups, preferably free carboxylic acid groups, in a total concentration of 0.001 - 5 mol/l
(iii) the food coating composition does not contain more than 0.8 wt% of a polyoxyethylene-polyoxypropylene block-copolymer group surfactant, and the food coating composition does not contain more than 4 wt% of an ammonia or an organic amine
(iv) the food coating composition does not contain lactic acid polymer which is poly-L-lactic acid and/or poly-D-lactic acid, and
(v) the food coating composition does not contain both of a silane coupling agent and a lubricant.

15. Use of a coating composition comprising at least 5 wt% lactic acid polymers dispersed in an aqueous phase, protective colloids and optionally a plasticizer, for coating of cheese, wherein:
(i) the coating composition does not comprise an added source of lactic acid bacteria, and/or
(ii) the coating composition comprises free carboxylic acid and/or free carboxylate groups, preferably free carboxylic acid groups, in a total concentration of 0.001 - 5 mol/l.

## Patentansprüche

1. Ein Verfahren zum Beschichten eines Käses, umfassend das Aufbringen einer wässrigen Beschichtungszusammensetzung auf die Oberfläche eines Käses, wobei die Beschichtungszusammensetzung mindestens 5 Gew.-% Milchsäurepolymere, dispergiert in einer wässrigen Phase, und gegebenenfalls einen Weichmacher umfasst, wobei:
(i) die Beschichtungszusammensetzung keine hinzugefügte Quelle für Milchsäurebakterien enthält, und/oder
(ii) die Beschichtungszusammensetzung freie Carbonsäure- und/oder freie Carboxylatgruppen, vorzugsweise freie Carbonsäuregruppen, in einer Gesamtkonzentration von 0,001 - 5 mol/l enthält.

2. Das Verfahren nach Anspruch 1, wobei die Milchsäurepolymere mindestens 50 mol-% D-Milchsäure- und/oder L-Milchsäure-Monomereinheiten und gegebenenfalls weitere Monomereinheiten umfassen.

3. Das Verfahren nach Anspruch 2, wobei die Milchsäurepolymere weitere Monomereinheiten umfassen, die ausgewählt sind aus aliphatischen Hydroxycarbonsäuren, aliphatischen Diolen, aliphatischen Dicarbonsäuren und Mischungen davon, vorzugsweise wobei die Milchsäurepolymere ein aliphatisches Diol und/oder eine aliphatische Dicarbonsäure als weitere Monomereinheit umfassen.

4. Das Verfahren nach Anspruch 3, wobei das aliphatische Diol ausgewählt ist aus der Gruppe bestehend aus 1,2-Ethandiol, 1,3-Propandiol, 1,4-Butandiol, 1,2-Propandiol, 1,2-Butandiol, 1,3-Butandiol, 2,3-Butandiol und Mischungen davon und/oder wobei die aliphatische Dicarbonsäure ausgewählt ist aus der Gruppe bestehend aus Bernsteinsäure, Adipinsäure, Sebacinsäure, Azelainsäure, n-Dodecandisäure und Mischungen davon.

5. Das Verfahren nach einem der Ansprüche 2 - 4, wobei die Milchsäurepolymere 90 - 98 mol-% D-Milchsäure- und/oder L-Milchsäure-Monomereinheiten und 2 - 10 mol-% weitere Monomereinheiten umfassen.

6. Das Verfahren nach einem der vorhergehenden Ansprüche, wobei die Milchsäurepolymere monomere Einheiten von D-Milchsäure und L-Milchsäure in einem Verhältnis von D-Milchsäure zu L-Milchsäure im Bereich von 80:20 - 20:80 umfassen, vorzugsweise 70:30 - 30:70, weiter bevorzugt 55:45 - 45:55.

7. Das Verfahren nach einem der vorhergehenden Ansprüche, wobei die Beschichtungszusammensetzung einen Weichmacher umfasst, der ausgewählt ist aus kleinmolekularen Weichmachern und polymeren Weichmachern, vorzugsweise ein kleinmolekularer Weichmacher, der ausgewählt ist aus Milchsäureestern, Glycerinestern, Citratestern und organischen Säuren.

8. Das Verfahren nach einem der vorhergehenden Ansprüche, wobei die Beschichtungszusammensetzung zum Zeitpunkt des Auftragens nachweisbare Mengen an freier Milchsäure umfasst.

9. Das Verfahren nach einem der vorhergehenden Ansprüche, wobei der maximal zulässige Gehalt an Milchsäurebakterien in der Beschichtungszusammensetzung 10⁵ KbE/g Beschichtungszusammensetzung beträgt, vorzugsweise 10³ KbE/g.

10. Das Verfahren nach einem der vorhergehenden Ansprüche, wobei die Beschichtungszusammensetzung 0,1 - 15 Gew.-% Weichmacher, bezogen auf das Gewicht der Milchsäurepolymere, umfasst.

11. Das Verfahren nach einem der vorhergehenden Ansprüche, wobei die Beschichtungszusammensetzung 30 - 50 Gew.-%, vorzugsweise 35 - 45 Gew.-% des kombinierten Gehalts an Milchsäurepolymeren und Weichmacher, bezogen auf das Gesamtgewicht der Beschichtungszusammensetzung, umfasst.

12. Das Verfahren nach einem der vorhergehenden Ansprüche, wobei die Beschichtungszusammensetzung weiterhin Schutzkolloide umfasst, wobei die Schutzkolloide vorzugsweise ein wasserlösliches Polymer umfassen, vorzugsweise ein wasserlösliches Polymer aus Vinylalkohol, Vinylpyrrolidon, Ethylenglycol oder Propylenglycol.

13. Ein beschichteter Käse, erhältlich durch das Verfahren nach einem der vorhergehenden Ansprüche.

14. Eine wässrige Nahrungsmittelbeschichtungszusammensetzung, umfassend mindestens 5 Gew.-% Milchsäurepolymere, dispergiert in einer wässrigen Phase, Schutzkolloide und gegebenenfalls einen Weichmacher, und wobei:
(i) die Nahrungsmittelbeschichtungszusammensetzung keine hinzugefügte Quelle für Milchsäurebakterien umfasst, und
(ii) die Nahrungsmittelbeschichtungszusammensetzung freie Carbonsäure- und/oder freie Carboxylatgruppen enthält, vorzugsweise freie Carbonsäuregruppen, in einer Gesamtkonzentration von 0,001 bis 5 mol/l
(iii) die Nahrungsmittelbeschichtungszusammensetzung nicht mehr als 0,8 Gew.-% eines oberflächenaktiven Mittels aus der Gruppe der Polyoxyethylen-Polyoxypropylen-Blockcopolymere enthält, und die Nahrungsmittelbeschichtungszusammensetzung nicht mehr als 4 Gew.-% Ammoniak oder eines organisches Amins enthält
(iv) die Nahrungsmittelbeschichtungszusammensetzung kein Milchsäurepolymer enthält, bei dem es sich um Poly-L-Milchsäure und/oder Poly-D-Milchsäure handelt, und
(v) die Nahrungsmittelbeschichtungszusammensetzung weder ein Silankupplungsmittel noch ein Gleitmittel enthält.

15. Verwendung einer Beschichtungszusammensetzung, umfassend mindestens 5 Gew.-% Milchsäurepolymere, dispergiert in einer wässerigen Phase, Schutzkolloide und gegebenenfalls einen Weichmacher, zur Beschichtung von Käse, wobei:
(i) die Beschichtungszusammensetzung keine hinzugefügte Quelle für Milchsäurebakterien enthält, und/oder
(ii) die Beschichtungszusammensetzung freie Carbonsäure- und/oder freie Carboxylatgruppen enthält, vorzugsweise freie Carbonsäuregruppen, in einer Gesamtkonzentration von 0,001 - 5 mol/l.

## Revendications

1. Méthode de revêtement d'un fromage, comprenant l'application d'une composition de revêtement aqueuse sur la surface d'un fromage, dans laquelle la composition de revêtement comprend au moins 5 % en poids de polymères d'acide lactique dispersés dans une phase aqueuse, et de manière facultative un plastifiant, dans laquelle :
(i) la composition de revêtement ne comprend pas de source ajoutée de bactéries lactiques, et/ou
(ii) la composition de revêtement comprend des groupes d'acide carboxylique libre et/ou de carboxylate libre, de préférence des groupes d'acide carboxylique libre, selon une concentration totale de 0,001 à 5 mol/1.

2. Méthode selon la revendication 1, dans laquelle les polymères d'acide lactique comprennent au moins 50 % en mole d'unités monomères d'acide D-lactique et/ou d'acide L-lactique et de manière facultative d'autres unités monomères.

3. Méthode selon la revendication 2, dans laquelle les polymères d'acide lactique comprennent d'autres unités monomères choisies parmi des acides hydroxycarboxyliques aliphatiques, des diols aliphatiques, des acides dicarboxyliques aliphatiques et des mélanges de ceux-ci, de préférence les polymères d'acide lactique comprennent un diol aliphatique et/ou un acide dicarboxylique aliphatique en tant qu'autre unité monomère.

4. Méthode selon la revendication 3, dans laquelle le diol aliphatique est choisi parmi le groupe constitué de 1,2-éthanediol, 1,3-propanediol, 1,4-butanediol, 1,2-propanediol, 1,2-butanediol, 1,3-butanediol, 2,3-butanediol et des mélanges de ceux-ci, et/ou dans lequel l'acide dicarboxylique aliphatique est choisi parmi le groupe constitué d'acide succinique, acide adipique, acide sébacique, acide azélaïque, acide n-dodécanedioïque et des mélanges de ceux-ci.

5. Méthode selon l'une quelconque des revendications 2 à 4, dans laquelle les polymères d'acide lactique comprennent 90 à 98 % en mole d'unités monomères d'acide D-lactique et/ou d'acide L-lactique et 2 à 10 % en mole d'autres unités monomères.

6. Méthode selon l'une quelconque des revendications précédentes, dans laquelle les polymères d'acide lactique comprennent des unités monomères d'acide D-lactique et d'acide L-lactique selon un rapport molaire entre l'acide D-lactique et l'acide L-lactique dans la plage de 80:20 à 20:80, de préférence de 70:30 à 30:70, de manière plus préférée de 55:45 à 45:55.

7. Méthode selon l'une quelconque des revendications précédentes, dans laquelle la composition de revêtement comprend un plastifiant choisi parmi des plastifiants à petites molécules et des plastifiants polymères, de préférence un plastifiant à petites molécules choisi parmi des esters lactiques, des esters de glycérol, des esters de citrate et des acides organiques.

8. Méthode selon l'une quelconque des revendications précédentes, dans laquelle la composition de revêtement comprend des quantités détectables d'acide lactique libre au moment de l'application.

9. Méthode selon l'une quelconque des revendications précédentes, dans laquelle le niveau maximal admissible de bactéries lactiques dans la composition de revêtement est de 10⁵ cfu/g de composition de revêtement, de préférence de 10³ cfu/g.

10. Méthode selon l'une quelconque des revendications précédentes, dans laquelle la composition de revêtement comprend 0,1 à 15 % en poids de plastifiant, par rapport au poids de polymères d'acide lactique.

11. Méthode selon l'une quelconque des revendications précédentes, dans laquelle la composition de revêtement comprend 30 à 50 % en poids, de préférence 35 à 45 % en poids, de la teneur combinée en polymères d'acide lactique et en plastifiant, par rapport au poids total de la composition de revêtement.

12. Méthode selon l'une quelconque des revendications précédentes, dans laquelle la composition de revêtement comprend en outre des colloïdes protecteurs, de préférence dans laquelle les colloïdes protecteurs comprennent un polymère hydrosoluble, de préférence un polymère hydrosoluble d'alcool vinylique, de vinylpyrrolidone, d'éthylène glycol ou de propylène glycol.

13. Fromage revêtu pouvant être obtenu par la méthode selon l'une quelconque des revendications précédentes.

14. Composition aqueuse de revêtement alimentaire, comprenant au moins 5 % en poids de polymères d'acide lactique dispersés dans une phase aqueuse, des colloïdes protecteurs et de manière facultative un plastifiant, et dans laquelle :
(i) la composition de revêtement alimentaire ne comprend pas de source ajoutée de bactéries lactiques, et
(ii) la composition de revêtement alimentaire comprend des groupes d'acide carboxylique libre et/ou de carboxylate libre, de préférence des groupes d'acide carboxylique libre, selon une concentration totale de 0,001 à 5 mol/l
(iii) la composition de revêtement alimentaire ne contient pas plus de 0,8 % en poids d'un tensioactif à groupe copolymère bloc polyoxyéthylène-polyoxypropylène, et la composition de revêtement alimentaire ne contient pas plus de 4 % en poids d'ammoniaque ou d'une amine organique
(iv) la composition de revêtement alimentaire ne contient pas de polymère d'acide lactique qui est un acide poly-L-lactique et/ou un acide poly-D-lactique, et
(v) la composition de revêtement alimentaire ne contient aucun parmi un agent de couplage au silane et un lubrifiant.

15. Utilisation d'une composition de revêtement comprenant au moins 5 % en poids de polymères d'acide lactique dispersés dans une phase aqueuse, des colloïdes protecteurs et de manière facultative un plastifiant, pour le revêtement de fromage, dans laquelle :
(i) la composition de revêtement ne comprend pas de source ajoutée de bactéries lactiques, et/ou
(ii) la composition de revêtement comprend des groupes d'acide carboxylique libre et/ou decarboxylate libre, de préférence des groupes d'acide carboxylique libre, selon une concentration totale de 0,001 à 5 mol/1.
